(19) Europäisches Patentamt
European Patent Office
Office européen des brevets

(11) **EP 4 394 059 A1**

(12) **EUROPEAN PATENT APPLICATION**
published in accordance with Art. 153(4) EPC

(43) Date of publication:
**03.07.2024 Bulletin 2024/27**

(21) Application number: **22872921.6**

(22) Date of filing: **21.09.2022**

(51) International Patent Classification (IPC):
*C21D 9/40* $^{(2006.01)}$   *F16C 33/64* $^{(2006.01)}$
*C22C 38/00* $^{(2006.01)}$   *C22C 38/22* $^{(2006.01)}$
*C21D 1/06* $^{(2006.01)}$   *C23C 8/26* $^{(2006.01)}$
*C23C 8/32* $^{(2006.01)}$

(52) Cooperative Patent Classification (CPC):
**C21D 1/06; C21D 9/40; C22C 38/00; C22C 38/22;
C23C 8/26; C23C 8/32; F16C 33/64**

(86) International application number:
**PCT/JP2022/035125**

(87) International publication number:
**WO 2023/048169 (30.03.2023 Gazette 2023/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.09.2021 JP 2021156802
27.09.2021 JP 2021156803
14.09.2022 JP 2022146401**

(71) Applicant: **NTN Corporation
Osaka-shi, Osaka 530-0005 (JP)**

(72) Inventors:
• **MIZUTA, Kohei
Kuwana-shi, Mie 511-0867 (JP)**
• **FUJIMURA, Naoki
Kuwana-shi, Mie 511-0867 (JP)**

(74) Representative: **Bockhorni & Brüntjen
Partnerschaft
Patentanwälte mbB
Agnes-Bernauer-Straße 88
80687 München (DE)**

(54) **MECHANICAL COMPONENT AND ROLLING BEARING**

(57)    A mechanical component (10) includes steel and has a surface (10a, 10b, 10c, 10d). The steel is quenched and tempered. The mechanical component includes a nitrided layer (11) on the surface and a core (12) farther away from the surface than the nitrided layer. A nitrogen concentration in the steel on the surface is greater than or equal to 0.01 mass percent. A hardness of the steel on the surface is greater than or equal to 820 Hv. An amount of residual austenite in the steel in the core is greater than or equal to 0.1 volume percent and less than or equal to 9 volume percent. A dislocation density of the residual austenite in the steel in the core is greater than or equal to $4.0 \times 10^{14}$ m$^{-2}$. The steel is high carbon steel or bearing steel.

FIG. 1

EP 4 394 059 A1

## Description

TECHNICAL FIELD

The present invention relates to a mechanical component and a rolling bearing. Specifically, the present invention relates to a mechanical component including a quenched and tempered steel and relates to a rolling bearing including the mechanical component.

BACKGROUND ART

Electrification of automobiles is progressing mainly in an electric vehicle (BEV), a plug-in hybrid electric vehicle (PHEV), and a hybrid electric vehicle (HEV). For example, an electric axle (e-Axle) in place of an engine, an electric brake, an electric variable valve mechanism (VTC), an electric compressor, and the like have been applied.

In an electric vehicle, in order to extend a travel distance with a small amount of electric power (improve electric power efficiency), it is desired to reduce the weight of the electric vehicle and to increase the speed and output of a motor in accordance with miniaturization of a unit. Accordingly, various components are required to be miniaturized, rotated at a high speed, and increased in strength. For example, as highspeed rotation or miniaturization of the motor progresses, the amount of heat generated in the rolling bearing increases, and the temperature of the rolling bearing during use increases. In addition, there is a high possibility that the viscosity of a lubricating oil is reduced or the amount of oil or grease is reduced in order to reduce the torque of the rolling bearing or the like, and then the amount of heat generated in the rolling bearing further increases. Therefore, a rolling bearing used in an electric vehicle is required to maintain dimensional stability and high hardness at high temperature.

The structure of a constituent material of a quenched and temped rolling bearing includes precipitates such as martensite, residual austenite, undissolved carbides, and nitrides. An appropriate amount of residual austenite is effective for improving a clean oil rolling fatigue life and an indentation-induced rolling fatigue life.

In the quenched and tempered rolling bearing, residual austenite is decomposed when the operating temperature rises. As a result, a dimension of a constituent component of the rolling bearing changes due to a volume expansion associated with the decomposition of the residual austenite. When a dimensional change rate of a bearing ring of the rolling bearing increases, there may be problems such as generation of creep, an increase in contact surface pressure associated with a decrease in a gap between a raceway surface and a rolling element, early damage caused by the increase in contact surface pressure, and an increase in abnormal noise and vibration associated with a decrease in dimensional accuracy.

Japanese Patent Laying-Open No. 2001-099163 (PTL 1) describes a bearing ring of a rolling bearing. The bearing ring described in PTL 1 includes quenched and tempered steel. In the bearing ring described in PTL 1, the amount of residual austenite in the steel is substantially zero. The bearing ring described in PTL 1 suppresses a temporal change in dimension associated with use.

CITATION LIST

PATENT LITERATURE

PTL 1: Japanese Patent Laying-Open No. 2001-099163

SUMMARY OF INVENTION

TECHNICAL PROBLEM

However, hardness of steel on a surface of the bearing ring described in PTL 1 is less than 752 Hv. When the hardness of the steel on the surface of the bearing ring decreases in a state where the amount of residual austenite is small, the indentation-induced rolling fatigue life decreases. Therefore, in the bearing ring described in PTL 1, there is room for improvement in the indentation-induced rolling fatigue life.

The present invention has been made in view of the above problem of the related art. Specifically, the present invention provides a mechanical component and a rolling bearing capable of suppressing a temporal change in dimension and improving a rolling fatigue life induced by an indentation on a surface.

SOLUTION TO PROBLEM

A mechanical component according to a first aspect of the present invention includes a steel and has a surface.

The steel is quenched and tempered. The mechanical component includes a nitrided layer on the surface and a core farther away from the surface than the nitrided layer. A nitrogen concentration in the steel on the surface is greater than or equal to 0.01 mass percent. A hardness of the steel on the surface is greater than or equal to 820 Hv. An amount of residual austenite in the steel in the core is greater than or equal to 0.1 volume percent and less than or equal to 9 volume percent. A dislocation density of the residual austenite in the steel in the core is greater than or equal to $4.0 \times 10^{14}$ m$^{-2}$. The steel is high carbon steel or bearing steel.

In the mechanical component according to the first aspect of the present invention, a dislocation density of martensite in the steel in the core may be greater than or equal to $6.0 \times 10^{14}$ m$^{-2}$.

A mechanical component according to a second aspect of the present invention includes a steel and has a surface. The steel is quenched and tempered. The mechanical component includes a nitrided layer on the surface and a core farther away from the surface than the nitrided layer. A nitrogen concentration in the steel on the surface is greater than or equal to 0.01 mass percent. A hardness of the steel on the surface is greater than or equal to 820 Hv. An amount of residual austenite in the steel in the core is greater than or equal to 0.1 volume percent and less than or equal to 5 volume percent. A dislocation density of the residual austenite in the steel in the core is greater than or equal to $1.0 \times 10^{15}$ m$^{-2}$. The steel is low carbon steel or carburized steel.

In the mechanical component according to the first aspect of the present invention or the second aspect of the present invention, when the nitrogen concentration in the steel on the surface is X (unit: mass percent), and the dislocation density of the martensite in the steel on the surface is Y (unit: m$^{-2}$), a relationship of $934923.48 + 379.96 \times X - 330.96 \times Y^2 - 5.41 \times 10^4 \times \log Y + 783.83 \times \log X^2 \geq 0$ may be satisfied.

In the mechanical component according to the first aspect of the present invention, the steel may contain greater than or equal to 0.77 mass percent of carbon, less than or equal to 4.0 mass percent of chromium, greater than or equal to 0.10 mass percent and less than or equal to 0.70 mass percent of silicon, and less than or equal to 0.25 mass percent of molybdenum.

In the mechanical component according to the second aspect of the present invention, the steel may contain greater than or equal to 0.01 mass percent and less than 0.77 mass percent of carbon, less than or equal to 4.0 mass percent of chromium, greater than or equal to 0.10 mass percent and less than or equal to 0.70 mass percent of silicon, and less than or equal to 0.25 mass percent of molybdenum.

In the mechanical component according to the first aspect or the second aspect of the present invention, a dimensional change rate after retaining at 160°C for 2500 hours may be less than or equal to $40 \times 10^{-5}$. In the mechanical component according to the first aspect or the second aspect of the present invention, a dimensional change rate after retaining at 160°C for 2500 hours may be less than or equal to $15 \times 10^{-5}$. The dimensional change rate is a value obtained by dividing a value obtained by subtracting a dimension of the mechanical component before the retaining from a dimension of the mechanical component after the retaining (a difference in dimension of the mechanical component before and after the retaining) by the dimension of the mechanical component before the retaining.

A rolling bearing of the present invention includes an inner ring, an outer ring, and a rolling element. At least one of the inner ring, the outer ring, or the rolling element is the mechanical component described above.

ADVANTAGEOUS EFFECTS OF INVENTION

In the mechanical component according to the first aspect or the second aspect of the present invention and the rolling bearing of the present invention, a temporal change in dimension can be suppressed, and a rolling fatigue life induced by an indentation on the surface can be improved.

BRIEF DESCRIPTION OF DRAWINGS

Fig. 1 is a sectional view of an inner ring 10.
Fig. 2A is a sectional view of an outer ring 30.
Fig. 2B is a sectional view of a rolling element 40.
Fig. 2C is a sectional view of a rolling bearing according to an embodiment.
Fig. 3 is a step chart illustrating a method of manufacturing inner ring 10.
Fig. 4 is a sectional view of a processing target member 20.
Fig. 5A is a sectional view of a processing target member 50.
Fig. 5B is a sectional view of a processing target member 60.
Fig. 6 is a schematic graph illustrating a shape on a surface of a bearing ring on which an indentation is formed.
Fig. 7 is a graph showing a relationship between hardness of steel on the surface of the bearing ring and bulge around the indentation.

DESCRIPTION OF EMBODIMENTS

An embodiment of the present invention will be described in detail with reference to the drawings. In the drawings described below, the same or corresponding parts are denoted by the same reference signs, and redundant description will not be repeated.

(Configuration of mechanical component according to embodiment)

Hereinafter, a configuration of a mechanical component according to the embodiment will be described. The mechanical component according to the embodiment is, for example, a bearing ring of a rolling bearing. The mechanical component according to the embodiment may be a rolling element of a rolling bearing. The mechanical component according to the embodiment may be a sliding member such as a gear, a shaft, a shaft, or a ball screw, or may be a structural member such as a housing. Here, an inner ring 10 of the rolling bearing will be described as an example of the mechanical component according to the embodiment.

The mechanical component according to the embodiment may be a constituent component (bearing ring (inner ring, outer ring), rolling element (ball, roller), and the like) of a rolling bearing used for an electric axle. The mechanical component according to the embodiment may be a component such as a gear, a shaft, or a shaft used for an electric axle. A general electric axle is a unit having a three-axis structure including a drive motor, a speed reducer, an inverter, and the like. In addition, some electric axles include a coaxial unit including a drive motor, a planetary speed reducer, an inverter, and the like, a drive motor, a continuously variable transmission (CVT), an inverter, and the like. There is a possibility that foreign matter generated by frictional wear of a gear or a housing is mixed into a rolling bearing used in a speed reducer of an electric axle. Therefore, in addition to dimensional stability at high temperature and a high load capacity, constituent components of a rolling bearing used in a speed reducer are required not to be damaged early even if foreign matter is mixed. In order to save space in the speed reducer and reduce the size of the speed reducer, a rolling bearing used in the speed reducer is required to have a high load capacity. Furthermore, a gears, an axis, a shaft, and the like used for an electric axle are also required to have dimensional stability at high temperature, resistance to foreign matter, and high load capacity for a similar reason to the reason for the constituent components of the rolling bearing used for the speed reducer of the electric axle.

The mechanical component according to the embodiment may be a constituent component of a rolling bearing or a ball screw used for an electric brake. The electric brake includes, for example, a motor, a reduction gear, a ball screw, a cylinder, a control device, and the like. The ball screw is a component including a shaft having a raceway surface, a nut (outer ring) having a raceway surface, a rolling element (ball) disposed between the raceway surface of the shaft and the raceway surface of the nut, a tube, a deflector, an end cap, and the like. A rolling bearing or a ball screw used for an electric brake is also required to have dimensional stability at high temperature, resistance to foreign matter, and high load capacity.

The electric compressor cools a room, a battery that tends to have a high temperature, and an in-vehicle electronic device. The mechanical component according to the embodiment may be a rolling bearing used for an electric compressor. A rolling bearing used for an electric compressor is also required to have dimensional stability at high temperature, resistance to foreign matter, and high load capacity.

The application of the mechanical component according to the embodiment is not limited to an application of an automobile. Even in other applications, sliding components such as a rolling bearing, a ball screw, a shaft, and a pin are required to have high dimensional stability, and stability against geometric tolerances such as roundness, cylindricity, and coaxiality due to a strict use environment. For example, a constituent component of a rolling bearing for a main shaft of a machine tool is also required to have high accuracy and dimensional stability.

A ball screw used in an electric actuator, a positioning device, an electric jack, a servo cylinder, an electric servo press machine, a mechanical press machine, a transmission, an electric putter steering, an electric injection molding machine, and the like is required to have dimensional stability at high temperature, resistance to foreign matter, and a high load capacity. A sliding component such as a shaft or a pin is likely to have a high temperature as rotating at a high speed, and is therefore required to have dimensional stability at high temperature.

Hereinafter, a configuration of inner ring 10 will be described.

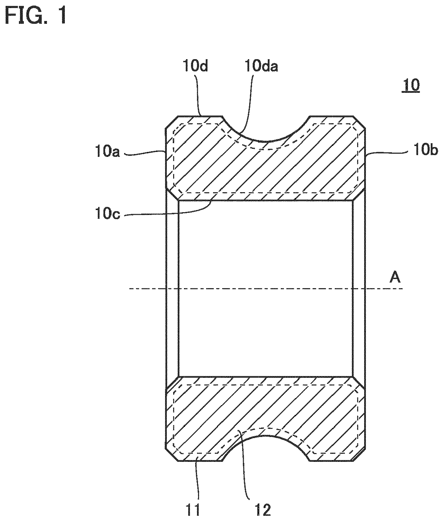

Fig. 1 is a sectional view of inner ring 10. As shown in Fig. 1, inner ring 10 has a first end surface 10a, a second end surface 10b, an inner peripheral surface 10c, and an outer peripheral surface 10d. Note that first end surface 10a, second end surface 10b, inner peripheral surface 10c, and outer peripheral surface 10d constitute a surface of inner ring 10. Inner ring 10 has a ring shape.

A central axis of inner ring 10 is defined as a central axis A. A direction along central axis A is defined as an axial direction. A direction orthogonal to central axis A and passing through central axis A is defined as a radial direction. A direction along a circumference centered on central axis A is defined as a circumferential direction.

First end surface 10a and second end surface 10b are end surfaces of inner ring 10 in the axial direction.

Second end surface 10b is a surface opposite to first end surface 10a in the axial direction.

Inner peripheral surface 10c extends along the circumferential direction. Inner peripheral surface 10c faces central axis A. One end and the other end in the axial direction of inner peripheral surface 10c are connected to first end surface 10a and second end surface 10b, respectively. Although not shown, inner ring 10 is fitted to the axis on inner peripheral surface 10c.

Outer peripheral surface 10d extends along the circumferential direction. Outer peripheral surface 10d faces the opposite side of central axis A. That is, outer peripheral surface 10d is a surface opposite to inner peripheral surface 10c in the radial direction. One end and the other end in the axial direction of outer peripheral surface 10d are connected to first end surface 10a and second end surface 10b, respectively. Outer peripheral surface 10d has a raceway surface 10da. Raceway surface 10da is a portion of outer peripheral surface 10d in contact with a rolling element (not shown). Raceway surface 10da is located, for example, at the center in the axial direction of outer peripheral surface 10d. Raceway surface 10da extends in the circumferential direction. In the sectional view, raceway surface 10da has a partial arc shape.

Inner ring 10 includes steel. The steel constituting inner ring 10 is quenched and tempered. The steel constituting inner ring 10 is, for example, high carbon steel. The high carbon steel refers to hyper-eutectoid steel having a carbon concentration of greater than or equal to 0.77 mass percent. The steel constituting inner ring 10 may be bearing steel. The bearing steel refers to high carbon chromium steel having a carbon concentration of greater than or equal to 0.9 mass percent and less than or equal to 1.05 mass percent and a chromium concentration of greater than or equal to 0.9 mass percent and less than or equal to 1.7 mass percent. The steel constituting inner ring 10 may be low carbon steel or carburized steel. The low carbon steel refers to hypo-eutectoid steel of less than 0.77 mass percent. The carburized steel refers to steel including any of chromium, molybdenum, or nickel with a carbon concentration of greater than or equal to 0.1 mass percent and less than or equal to 0.5 mass percent.

Specific examples of the high carbon steel include SK85 specified in JIS standards. Specific examples of the bearing steel include SUJ2, SUJ3, SUJ4, and SUJ5 specified in JIS standards, 50100, 51100, 52100, and A485 Grade1 specified in ASTM standards, 100Cr6, 100CrMnSi4-4, 100CrMnSi6-4, 100CrMo7, 100CrMo7-3, and 100 CrMnMoSi8-4-6 specified in ISO standards, 105Cr4 specified in DIN standards, and GCr4, GCr15, GCr15SiMn, GCrSiMo, and GCr18 Mo specified in GB/T. Specific examples of the low carbon steel include S55C, S53C, S50C, S45C, S25C, and S15C specified in JIS standard, 1045, 1046, 1050, 1053, and 1055 specified in AISI standard, C45, C45E, C45R, C55, C55E, and C55R specified in ISO standard, and 45, 50Mn, and 55 specified in GB/T. Specific examples of the carburized steel include SCr420, SCr435, SCM420, SCM435, SNCM420, and SNCM815 specified in JIS standard, 5120, 4118, 4135, 4320, 8620, 5135, and 9315 specified in AISI standard, 20Cr4, 20CrMo4, 20NiCrMo7, 18NiCrMo14-6, 17NiCrMo6-4, 37Cr4, 25CrMo4, and 34CrMo4 specified in ISO standard, and G20CrMo and G20CrNi2Mo specified in GB/T.

The carbon concentration in the steel constituting inner ring 10 is, for example, greater than or equal to 0.77 mass percent. The carbon concentration in the steel constituting inner ring 10 may be greater than or equal to 0.01 mass percent and less than 0.77 mass percent. The steel constituting inner ring 10 may contain less than or equal to 4.0 mass percent of chromium, greater than or equal to 0.10 mass percent and less than or equal to 0.70 mass percent of silicon, and less than or equal to 0.25 mass percent of molybdenum. In this case, the steel constituting inner ring 10 is not required to contain chromium and molybdenum.

Nitriding or nitrocarburizing treatment is performed on the surface of inner ring 10. That is, inner ring 10 has a nitrided layer 11 on the surface (the surface of inner ring 10 is nitrided layer 11). In nitrided layer 11, nitrogen forms solid solution in steel. A portion of inner ring 10 farther away from the surface than nitrided layer 11 is defined as a core 12. From another point of view, core 12 is an inner portion of inner ring 10 other than nitrided layer 11. In core 12, nitrogen does not form solid solution in the steel. A nitrogen concentration in the steel on the surface of inner ring 10 is greater than or equal to 0.01 mass percent. The nitrogen concentration in the steel on the surface of inner ring 10 may be greater than or equal to 0.10 mass percent. The nitrogen concentration on the surface of inner ring 10 is measured by using, for example, an electron probe micro analyzer (EPMA). In the measurement by EMPA, a calibration curve is created by using a standard sample whose nitrogen concentration is clear.

The hardness of the steel on the surface of inner ring 10 is greater than or equal to 820 Hv. The hardness of the steel on the surface of inner ring 10 is measured by a Vickers hardness test method defined in JIS standard (JIS Z 2244: 2009). The load in measuring the hardness of the steel on the surface of inner ring 10 is 300 g. The hardness of the steel on the surface of inner ring 10 is obtained by measuring at least three points or more and averaging the obtained measured values.

When the steel constituting inner ring 10 is high carbon steel or bearing steel, an amount of residual austenite in the steel in core 12 is less than or equal to 9 volume percent. In this case, the amount of residual austenite in the steel in core 12 is greater than or equal to 0.1 volume percent. When the steel constituting inner ring 10 is low carbon steel or carburized steel, the amount of residual austenite in the steel in core 12 is less than or equal to 5 volume percent. In this case, the amount of residual austenite in the steel in core 12 is greater than or equal to 0.1 volume percent.

The amount of residual austenite in the steel in core 12 is measured by using an X-ray diffraction method.

When the amount of residual austenite in the steel in core 12 is measured by the X-ray diffraction method, a Cr tube type X-ray diffractometer is used. In the Cr tube type X-ray diffractometer, the wavelength of a Cr-K$\alpha$ ray is 2.29093 $\times$ $10^{-10}$ m, the tube voltage is 30 kV, the tube current is 10 mA, and the collimator size is 2 mm $\times$ 2 mm. When the amount of residual austenite in the steel in core 12 is measured, inner ring 10 is preferably electrolytically polished so that the residual austenite is not subjected to stress-induced transformation.

When the steel constituting inner ring 10 is high carbon steel or bearing steel, a dislocation density of the residual austenite in the steel in core 12 is greater than or equal to 4.0 $\times$ $10^{14}$ m$^{-2}$. When the steel constituting inner ring 10 is high carbon steel or bearing steel, a dislocation density of martensite in the steel in core 12 is preferably greater than or equal to 6.0 $\times$ $10^{14}$ m$^{-2}$. When the steel constituting inner ring 10 is low carbon steel or carburized steel, the dislocation density of the residual austenite in the steel in core 12 is greater than or equal to 1.0 $\times$ $10^{15}$ m$^{-2}$.

The nitrogen concentration in the steel on the surface of inner ring 10 is denoted by X (unit: mass percent), the dislocation density of martensite in the steel on the surface of inner ring 10 is denoted by Y (unit: m$^{-2}$), and the hardness of the steel on the surface of inner ring 10 is denoted by Z (unit: Hv). In this case, Z can be calculated by 935743.48 + 379.96 $\times$ X - 330.96 $\times$ Y$^2$ - 5.41 $\times$ $10^4$ $\times$ logY + 783.83 $\times$ logX$^2$ (Formula 1). Formula 1 is obtained by performing multiple regression analysis after obtaining the value of Z when X and Y are changed by experiment. From Formula 1, in order to set the hardness of steel on the surface of inner ring 10 to greater than or equal to 820 Hv, it is only required to satisfy the relationship of 934923.48 + 379.96 $\times$ X - 330.96 $\times$ Y$^2$ - 5.41 $\times$ $10^4$ $\times$ logY + 783.83 $\times$ logX$^2 \geq 0$ (Formula 2).

The dislocation density of the residual austenite in the steel in core 12 and the dislocation density of the martensite in the steel on the surface of inner ring 10 are measured by using a cobalt (Co) tube type X-ray diffractometer. Specifically, first, X-ray profiles of austenite and martensite in core 12 (the surface of inner ring 10) are measured by using a Co tube type X-ray diffractometer. In the Co tube type X-ray diffractometer, the wavelength of the Co-K$\alpha$ ray is 1.7889 $\times$ $10^{-10}$ m, the tube voltage is 40 kV, the tube current is 50 mA, and the collimator size is 1 mm in diameter. The X-ray profiles of austenite and martensite in core 12 (the surface of inner ring 10) are measured within a range where $2\theta$ is greater than or equal to 30° and less than or equal to 135°. Second, after a Rietveld analysis is performed, the half-value widths of peaks of X-ray profiles of martensite and austenite obtained by X-ray diffraction are separated into crystallite size and strain. Third, by applying the separated crystallite size and strain to a Williamson-Hall equation below, the dislocation density of martensite and the dislocation density of austenite are obtained. In this equation, $\rho$ is the dislocation density (unit: m$^{-2}$), $\varepsilon$ is the above strain, and b is the length of Burgers vector (b = 0.25 $\times$ $10^{-9}$ m).
[Formula 1]

$$\text{Formula 1}$$

$$\rho = 14.4 \times \frac{\varepsilon^2}{b^2}$$

In the X-ray profile of martensite obtained by X-ray diffraction for core 12 (the surface of inner ring 10), peaks of a {110} plane, a {200} plane, a {211} plane, and a {220} plane are to be measured. In the X-ray profile of austenite obtained by X-ray diffraction for core 12 (the surface of inner ring 10), peaks of a {111} plane, a {200} plane, a {220} plane, a {311} plane, and a {222} plane are to be measured. The reason why the Rietveld analysis is performed above is to reduce the influence of {200} plane of martensite and {200} plane of austenite having different elastic moduli.

A dimensional change rate of inner ring 10 after retaining at 160°C for 2500 hours is less than or equal to 40 $\times$ $10^{-5}$. The dimensional change rate of inner ring 10 after retaining at 160°C for 2500 hours is preferably less than or equal to 15 $\times$ $10^{-5}$. The dimensional change rate of inner ring 10 is calculated by dividing a value obtained by subtracting the dimension of inner ring 10 before the retaining from the dimension of inner ring 10 after the retaining by the dimension of inner ring 10 before the retaining.

<Modification>

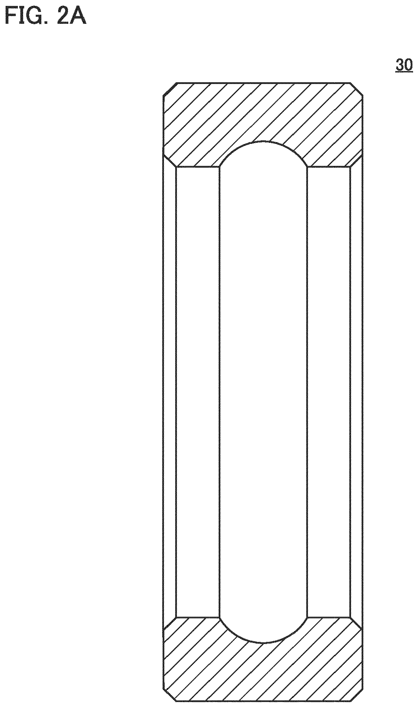

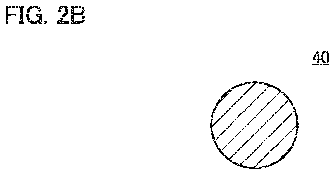

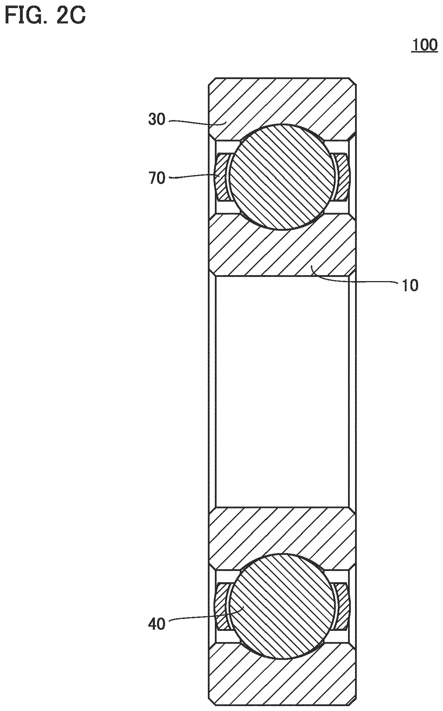

Fig. 2A is a sectional view of an outer ring 30. Fig. 2B is a sectional view of a rolling element 40. As shown in Fig. 2A, the mechanical component according to the embodiment may be outer ring 30 of the rolling bearing. As shown in Fig. 2B, the mechanical component according to the embodiment may be rolling element 40. Note that the configurations of outer ring 30 and rolling elements 40 are similar to the configuration of inner ring 10 except for the shape, and Fig. 2C is a sectional view of the rolling bearing according to the embodiment. The rolling bearing (rolling bearing 100) according to the embodiment includes inner ring 10, outer ring 30, rolling elements 40, and a retainer 70. In rolling bearing 100, at least one of inner ring 10, outer ring 30, or rolling elements 40 is only required to be the mechanical component according to the embodiment.

(Method of manufacturing mechanical component according to embodiment)

Hereinafter, a method of manufacturing inner ring 10 will be described.

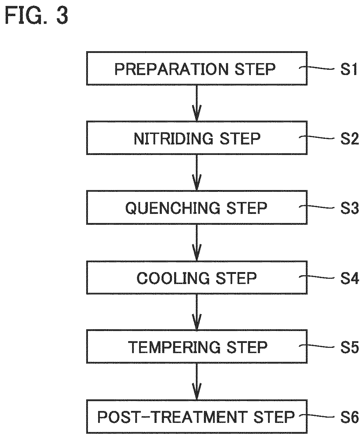

Fig. 3 is a step chart illustrating the method of manufacturing inner ring 10. As shown in Fig. 3, the method of manufacturing inner ring 10 includes a preparation step S1, a nitriding step S2, a quenching step S3, a cooling step S4, a tempering step S5, and a post-treatment step S6.

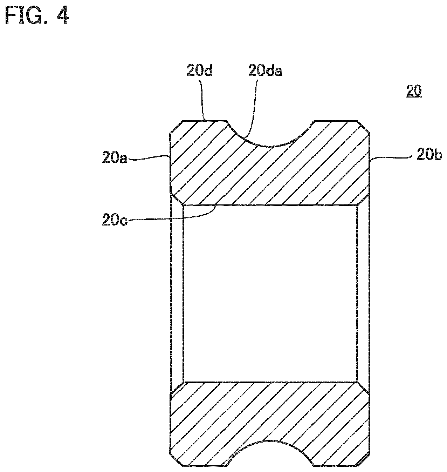

In preparation step S1, a processing target member 20 is prepared. Fig. 4 is a sectional view of processing target member 20. As shown in Fig. 4, processing target member 20 has a ring shape and has a first end surface 20a, a second end surface 20b, an inner peripheral surface 20c, and an outer peripheral surface 20d. First end surface 20a, second end surface 20b, inner peripheral surface 20c, and outer peripheral surface 20d are surfaces to be first end surface 10a, second end surface 10b, inner peripheral surface 10c, and outer peripheral surface 10d, respectively, after an end of post-treatment step S6. Processing target member 20 includes the same steel as inner ring 10.

In nitriding step S2, processing target member 20 is subjected to nitriding treatment. The nitriding treatment for processing target member 20 is performed by heating and retaining processing target member 20 in an atmosphere gas containing a nitrogen source. The heating temperature and the nitrogen concentration in the atmosphere gas in nitriding step S2 are set so that a compound layer is not formed on the surface of processing target member 20. By performing nitriding step S2, nitrogen enters inside from the surface of processing target member 20, and the nitrogen forms solid solution in processing target member 20. Nitriding step S2 is performed such that nitrogen reaches inside of a position to be the surface of inner ring 10 after post-treatment step S6 is performed.

Instead of nitriding step S2, a nitrocarburizing step may be performed on processing target member 20. The nitrocarburizing treatment on processing target member 20 is performed by heating and retaining the processing target member with a nitrogen source and a carbon source in an atmosphere gas. The heating temperature and the carbon concentration and the nitrogen concentration in the atmosphere gas in the nitrocarburizing step are set so that a compound layer is not formed on the surface of processing target member 20. By performing the nitrocarburizing step, carbon and nitrogen enter inside from the surface of processing target member 20, and the carbon and nitrogen form solid solution in processing target member 20. The nitrocarburizing step is performed such that nitrogen and carbon reach inside of a position to be the surface of inner ring 10 after post-treatment step S6 is performed.

In quenching step S3, processing target member 20 is quenched. Processing target member 20 is quenched by heating and retaining processing target member 20 to a temperature higher than or equal to an $A_1$ transformation point of the steel constituting processing target member 20, and then cooling processing target member 20 to a temperature lower than or equal to an Ms transformation point of the steel constituting the member to be processed. By performing quenching step S3, martensite and residual austenite are generated in the steel constituting processing target member 20. After quenching step S3 is performed, quenching step S3 may be repeated by heating processing target member 20 to higher than or equal to $A_1$ transformation point. By performing quenching step S3 a plurality of times, crystal grains are refined, and the effect in cooling step S4 is improved.

In cooling step S4, processing target member 20 is subjected to a sub-zero treatment. In cooling step S4, cryo treatment (super sub-zero treatment) may be performed on processing target member 20. In the sub-zero treatment, processing target member 20 is cooled to a temperature higher than -100°C and lower than or equal to room temperature. In the cryo treatment, processing target member 20 is cooled to a temperature lower than or equal to -100°C. By performing cooling step S4, a part of the residual austenite in the steel constituting processing target member 20 is transformed into martensite. Note that a low-temperature tempering step or a cleaning step for preventing cracking may be performed before cooling step S4 is performed.

In tempering step S5, processing target member 20 is tempered. Processing target member 20 is tempered by heating processing target member 20 to a temperature lower than $A_1$ transformation point of the steel constituting processing target member 20. Specifically, processing target member 20 is tempered by heating processing target member 20 to a temperature of about 180°C. In post-treatment step S6, machining such as grinding and polishing is performed on the surface of processing target member 20. As described above, inner ring 10 having the structure shown in Fig. 1 is manufactured. When processing target member 20 is heated at a temperature of higher than or equal to 180°C in tempering step S5, the higher the heating temperature, the lower the dislocation density of martensite and the lower the hardness. On the other hand, when cooling step S4 is performed, the dislocation density of martensite is less likely to decrease by heating in tempering step S5, and therefore, the hardness decreases as the heating temperature increases, but hardness higher than usual can be obtained.

<Modification>

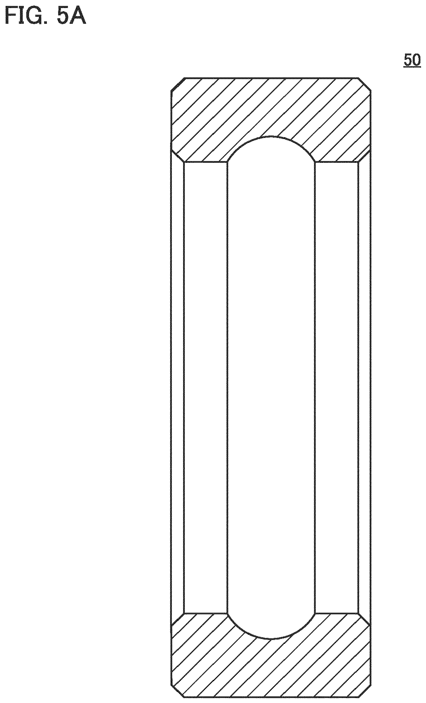

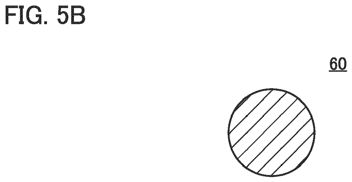

Fig. 5A is a sectional view of a processing target member 50. Fig. 5B is a sectional view of a processing target member 60. As shown in Fig. 5A, when the mechanical component according to the embodiment is outer ring 30, processing target member 50 that is a ring-shaped member is used as a processing target member. As shown in Fig.

5B, when the mechanical component according to the embodiment is rolling element 40, processing target member 60 that is a spherical member is used as a processing target member. Processing target member 50 and processing target member 60 have a similar configuration to processing target member 20 except for the shape.

(Effects of mechanical component according to embodiment)

It is conceivable to reduce the amount of residual austenite by performing tempering at a high temperature as a measure for suppressing a temporal change in dimension of the bearing ring or rolling element including steel having been quenched and temped. However, by performing tempering at high temperature, it is possible to suppress the temporal change in dimension as the amount of residual austenite decreases, but the hardness of steel on the surfaces of the bearing ring and the rolling element decreases.

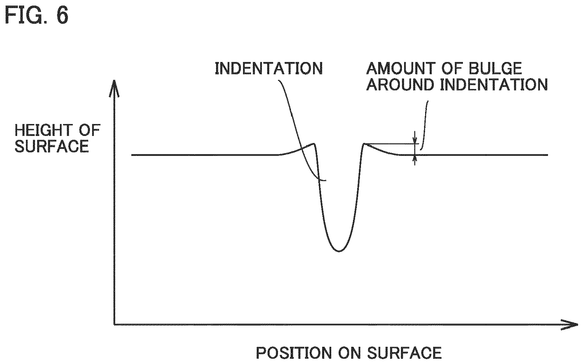

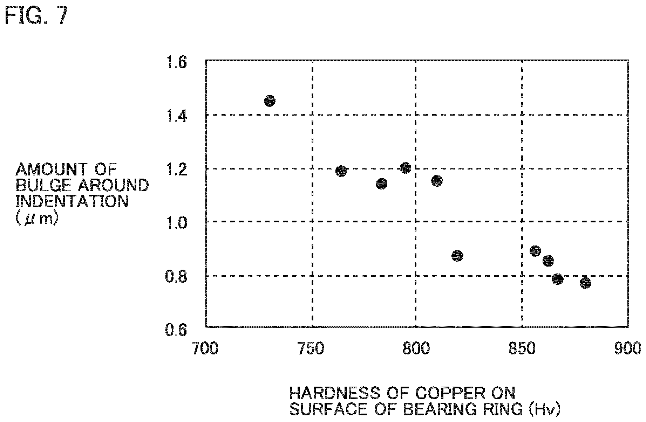

When foreign matter is caught between the surface of the bearing ring and the rolling element, an indentation is formed on the surface of the bearing ring. Fig. 6 is a schematic graph illustrating a shape on the surface of the bearing ring on which an indentation is formed. As shown in Fig. 6, the surface of the bearing ring bulges around the indentation. Fig. 7 is a graph showing a relationship between the hardness of the steel on the surface of the bearing ring and the bulge around the indentation. In Fig. 7, the horizontal axis represents hardness (unit: Hv), and the horizontal axis represents the amount of bulge (unit: $\mu$m) around the indentation. As illustrated in Fig. 7, as the hardness of the steel on the surface of the bearing ring decreases, the amount of bulge around the indentation increases.

When the amount of bulge around the indentation increases, stress concentration on the bulge around the indentation occurs, and fatigue fracture induced by the indentation is likely to occur. Therefore, when tempering is performed at high temperature to suppress a temporal change in dimension, there is a possibility that a rolling fatigue life of the bearing ring is insufficient.

In a state in which the amount of residual austenite in the steel is low and martensite having a high dislocation density (that is, poor deformability) surrounds a periphery of the residual austenite, the residual austenite is restrained or stressed by the martensite to reduce a lattice spacing (lattice constant), and as a result, the dislocation density of the residual austenite in the steel becomes high. Such residual austenite is still restrained by the martensite having a high dislocation density around the residual austenite when expanded in volume due to decomposition. Therefore, even if the residual austenite is decomposed due to use, a dimensional change due to the decomposition is reduced.

In inner ring 10, the amount of residual austenite in the steel in core 12 is reduced by performing the sub-zero treatment or the cryo treatment. Specifically, in inner ring 10, when the steel constituting inner ring 10 is high carbon steel or bearing steel, the amount of residual austenite in the steel in core 12 is less than or equal to 9 volume percent, and when the steel constituting inner ring 10 is low carbon steel or carburized steel, the amount of residual austenite in the steel in core 12 is less than or equal to 5 volume percent.

In inner ring 10, since the sub-zero treatment or the cryo treatment is performed, the dislocation density of martensite in the steel in core 12 increases, and as a result, the dislocation density of residual austenite in the steel in core 12 also increases. Specifically, in inner ring 10, when the steel constituting inner ring 10 is high carbon steel or bearing steel, the dislocation density of residual austenite in the steel in core 12 is greater than or equal to $4.0 \times 10^{14}$ m$^{-2}$, and when the steel constituting inner ring 10 is low carbon steel or carburized steel, the dislocation density of residual austenite in the steel in core 12 is greater than or equal to $1.0 \times 10^{15}$ m$^{-2}$.

Therefore, in the steel in core 12, since a state in which the residual austenite is surrounded by the martensite having a high dislocation density occurs, even if the residual austenite in the steel in core 12 is decomposed due to a temperature rise associated with use of inner ring 10, the volume expansion due to the decomposition is restrained by the martensite having a high dislocation density around the residual austenite, and thus a dimensional change hardly occurs. As described above, in inner ring 10, a temporal change in dimension associated with is suppressed.

In addition, since inner ring 10 is not tempered at high temperature, the decomposition of martensite on the surface of inner ring 10 progresses slightly. The nitrogen concentration in the steel on the surface of inner ring 10 is greater than or equal to 0.01 mass percent, and the steel on the surface of inner ring 10 is strengthened by solid solution. As a result, the hardness of the steel on the surface of inner ring 10 is greater than or equal to 820 Hv. As shown in Fig. 7, when the hardness of the steel on the surface of inner ring 10 is greater than or equal to 820 Hv, the amount of bulge around the indentation sharply decreases. As described above, in inner ring 10, the rolling fatigue life starting from the indentation is also improved. By increasing the hardness of the steel on the surface of inner ring 10, indentation is less likely to be formed on the surface of inner ring 10, and thus, a static load capacity of the rolling bearing using inner ring 10 is improved.

High residual compressive stress may be applied to the surface of the rolling element by a pressurization step, and indentation is less likely to be formed than on the surface of the bearing ring (inner ring, outer ring). Therefore, when only the bearing ring is used as the mechanical component according to the embodiment, an indentation-induced rolling fatigue life of the rolling bearing is also improved.

(Test for evaluating hardness)

Samples 1 to 19 were prepared in order to evaluate a relationship between the hardness, the dislocation density of martensite, and the nitrogen concentration on the surface of a mechanical component including steel having been quenched and temped. Samples 1 to 19 have a ring shape with an inner diameter of 54 mm, an outer diameter of 60 mm, and a width of 15 mm. In samples 1 to 19, a steel type, the nitrogen concentration in the steel at the surface of the sample, and the dislocation density of the martensite of the steel at the surface of the sample were changed as shown in Table 1. "OK" and "NG" described in the column of "satisfaction of Formula 2" in Table 1 mean that Formula 2 shown above is satisfied and Formula 2 is not satisfied, respectively.

[Table 1]

Table 1

| Sample | Steel type | Properties of each sample on surface | | | | |
|---|---|---|---|---|---|---|
| | | Hardness (Hv) | Nitrogen concentration (mass%) | Amount of residual austenite (Volume%) | Dislocation density of martensite ($m^{-2}$) | Satisfaction of Formula 2 |
| 1 | SUJ2 | 892 | 0.34 | 13.6 | $1.30 \times 10^{15}$ | OK |
| 2 | SUJ2 | 885 | 0.16 | 11.9 | $1.37 \times 10^{15}$ | OK |
| 3 | SUJ2 | 934 | 0.45 | 12.6 | $1.37 \times 10^{15}$ | OK |
| 4 | SUJ2 | 897 | 0.23 | 10.3 | $1.41 \times 10^{15}$ | OK |
| 5 | SUJ2 | 866 | 0.12 | 9.7 | $1.48 \times 10^{15}$ | OK |
| 6 | SCM420 | 838 | 0.43 | 11.0 | $1.25 \times 10^{15}$ | OK |
| 7 | SCM420 | 849 | 0.36 | 9.4 | $1.38 \times 10^{15}$ | OK |
| 8 | SUJ2 | 770 | 0.00 | 7.2 | $1.31 \times 10^{15}$ | NG |
| 9 | SUJ2 | 856 | 0.36 | 15.6 | $1.30 \times 10^{15}$ | OK |
| 10 | SUJ2 | 847 | 0.20 | 13.8 | $1.33 \times 10^{15}$ | OK |
| 11 | SUJ2 | 865 | 0.24 | 11.9 | $1.36 \times 10^{15}$ | OK |
| 12 | SUJ2 | 862 | 0.38 | 18.5 | $1.34 \times 10^{15}$ | OK |
| 13 | SUJ2 | 868 | 0.19 | 17.3 | $1.47 \times 10^{15}$ | OK |
| 14 | SUJ2 | 877 | 0.19 | 20.9 | $1.40 \times 10^{15}$ | OK |
| 15 | SUJ2 | 801 | 0.20 | 10.2 | $1.16 \times 10^{15}$ | NG |
| 16 | SUJ2 | 783 | 0.17 | 12.1 | $9.98 \times 10^{14}$ | NG |
| 17 | SUJ2 | 772 | 0.25 | 24.3 | $1.30 \times 10^{15}$ | NG |
| 18 | SUJ2 | 742 | 0.00 | 9.0 | $1.23 \times 10^{15}$ | NG |
| 19 | SUJ2 | 706 | 0.00 | 5.3 | $9.43 \times 10^{14}$ | NG |

The nitrogen concentration in the steel on the surface of each sample was adjusted by changing a heating temperature and a retaining time in a nitriding treatment or a nitrocarburizing treatment. The dislocation density of martensite in the steel on the surface of each sample was adjusted by changing a cooling temperature and a retaining time in a sub-zero treatment or a cryo treatment.

In samples 1 to 7 and samples 9 to 14, Formula 2 was satisfied. On the other hand, in sample 8 and samples 15 to 19, Formula 2 was not satisfied.

In samples 1 to 7 and samples 9 to 14, the hardness of the steel on the surface of the sample was greater than or equal to 820 Hv. On the other hand, in samples 8 and 15 to 19, the hardness of the steel at the surface of the sample was less than 820 Hv. This comparison has made it clear that the hardness of the steel on the surface of the mechanical component becomes greater than or equal to 820 Hv and the rolling fatigue life is improved by satisfying Formula 2. From another point of view, it has been found that, by increasing both the nitrogen concentration in the steel on the surface of the mechanical component and the dislocation density of martensite in the steel on the surface of the mechanical component, the hardness of the steel on the surface of the mechanical component is improved, and eventually, the rolling fatigue life of the mechanical component is improved.

(Test for evaluating temporal change in dimension)

Samples 3 to 7 and samples 9 to 14 described above were used to evaluate a temporal change in dimension. Table 2 shows the amount of residual austenite in the steel in cores of samples 3 to 7 and samples 9 to 14 and the dislocation density in the steel in the cores of samples 3 to 7 and samples 9 to 14.

[Table 2]

Table 2

| Sample | Properties of each sample in core 12 | | | | Dimensional change rate $(10^{-5})$ |
|---|---|---|---|---|---|
| | Amount of residual austenite (Volume%) | Solid solution carbon amount (mass%) | Dislocation density of martensite $(m^{-2})$ | Dislocation density of residual austenite $(m^{-2})$ | |
| 3 | 8.2 | 0.69 | $1.34 \times 10^{15}$ | $6.05 \times 10^{14}$ | 6.5 |
| 4 | 8.2 | 0.69 | $1.34 \times 10^{15}$ | $6.05 \times 10^{14}$ | 4.2 |
| 5 | 7.5 | 0.49 | $1.29 \times 10^{15}$ | $6.43 \times 10^{14}$ | 10.7 |
| 6 | 4.8 | 0.20 | $4.71 \times 10^{14}$ | $2.66 \times 10^{16}$ | 9.8 |
| 7 | 4.4 | 0.20 | $4.14 \times 10^{14}$ | $1.44 \times 10^{15}$ | 4.9 |
| 9 | 8.7 | 0.68 | $1.23 \times 10^{15}$ | $4.22 \times 10^{14}$ | 38.5 |
| 10 | 8.7 | 0.68 | $1.23 \times 10^{15}$ | $4.22 \times 10^{14}$ | 34.6 |
| 11 | 6.0 | 0.54 | $1.20 \times 10^{15}$ | $5.16 \times 10^{14}$ | 27.1 |
| 12 | 11.8 | 0.73 | $1.32 \times 10^{15}$ | $3.54 \times 10^{14}$ | 60.8 |
| 13 | 11.8 | 0.73 | $1.32 \times 10^{15}$ | $3.54 \times 10^{14}$ | 58.9 |
| 14 | 13.4 | 0.82 | $1.31 \times 10^{15}$ | $3.17 \times 10^{14}$ | 51.8 |

The dislocation density of martensite in the steel in core 12 of each sample and the amount of residual austenite of the martensite in the steel in core 12 of each sample were adjusted by changing the cooling temperature and the retaining time in the sub-zero treatment or the cryo treatment.
When the steel is high carbon steel or bearing steel, condition A is satisfied if the dislocation density of martensite in the steel in core 12 is greater than or equal to $4.0 \times 10^{14}$ m$^{-2}$. When the steel is low carbon steel or carburized steel, condition A is satisfied if the dislocation density of martensite in the steel in core 12 is greater than or equal to $1.0 \times 10^{15}$ m$^{-2}$.
When the steel is high carbon steel or bearing steel, condition B is satisfied if the amount of residual austenite in the steel in core 12 of the sample is less than or equal to 9 volume percent. When the steel is low carbon steel or carburized steel, condition B is satisfied if the amount of residual austenite in the steel in core 12 of the sample is less than or equal to 5 volume percent.
In samples 3 to 7 and samples 9 to 11, condition A and condition B were satisfied. On the other hand, in Samples 12 to 14, condition A and condition B were not satisfied.
In samples 3 to 7 and samples 9 to 11, the dimensional change rate after retaining at 160°C for 2500 hours was less than or equal to $40 \times 10^{-5}$. On the other hand, in samples 12 to 14, the dimensional change rate after retaining at 160°C for 2500 hours exceeded 50 $\times$ 10$^{-5}$. This comparison has made it clear that the dimensional change of the mechanical component is suppressed by satisfying condition A and condition B.

When the steel is high carbon steel or bearing steel, condition C is satisfied if the dislocation density of martensite in the steel in core 12 of the sample is greater than or equal to 6.0 $\times$ 10$^{14}$ m$^{-2}$. In samples 3 to 5, condition C is satisfied, and the dimensional change rate after retaining at 160°C for 2500 hours was less than or equal to 15 $\times$ 10$^{-5}$. On the other hand, in samples 9 to 11, condition C was not satisfied, and the dimensional change rate after retaining at 160°C for 2500 hours exceeded 15 $\times$ 10$^{-5}$. This comparison has made it clear that the dimensional change of the mechanical component is further suppressed by satisfying condition C.

(Configuration of inner ring 10 according to modification)

The nitrogen concentration in the steel on the surface of inner ring 10 according to a modification is, for example, greater than or equal to 0.3 mass percent. The nitrogen concentration in the steel on the surface of inner ring 10 according to the modification is preferably greater than or equal to 0.4 mass percent. The hardness of the steel on the surface of inner ring 10 according to the modification is, for example, greater than or equal to 850 Hv. The hardness of the steel on the surface of inner ring 10 according to the modification after retaining at 160°C for 2500 hours is preferably greater than or equal to 850 Hv.

The steel constituting inner ring 10 according to the modification is high carbon steel or bearing steel. The steel constituting inner ring 10 according to the modification preferably contains less than 0.77 mass percent of carbon, less than or equal to 4.0 mass percent of chromium, greater than or equal to 0.10 mass percent and less than or equal to 0.70 mass percent of silicon, and less than or equal to 0.25 mass percent of molybdenum.

In inner ring 10 according to the modification, the amount of residual austenite in the steel in core 12 is less than or equal to 9 volume percent. In inner ring 10 according to the modification, the amount of residual austenite in the steel in core 12 is, for example, greater than or equal to 0.1 volume percent. In inner ring 10 according to the modification, the dislocation density of the residual austenite in the steel in core 12 is greater than or equal to 4.0 $\times$ 10$^{14}$ m$^{-2}$. In inner ring 10 according to the modification, the dislocation density of the residual austenite in the steel in core 12 is preferably greater than or equal to 6.0 $\times$ 10$^{14}$ m$^{-2}$.

In order to set the hardness of steel on the surface of inner ring 10 according to the modification to greater than or equal to 850 Hv on the basis of Formula 1, inner ring 10 according to the modification preferably satisfies the relationship of $934893.48 + 379.96 \times X - 330.96 \times Y^2 - 5.41 \times 10^4 \times \log Y + 783.83 \times \log X^2 \geq 0$ (Formula 3).

A method of manufacturing inner ring 10 according to the modification is similar to the method of manufacturing inner ring 10, and will not be described here. An effect of inner ring 10 according to the modification is similar to the effect of inner ring 10, and will not be described here. Fig. 6 illustrates the relationship between the hardness of steel on the surface of inner ring 10 according to the modification and the bulge around the indentation.

(Test for evaluating hardness)

Samples 20 to 38 were prepared in order to evaluate a relationship between the hardness, the dislocation density of martensite, and the nitrogen concentration on the surface of a mechanical component including steel having been quenched and temped. Samples 20 to 38 have a ring shape with an inner diameter of 54 mm, an outer diameter of 60 mm, and a width of 15 mm. In samples 20 to 38, a steel type, the nitrogen concentration in the steel at the surface of the sample, and the dislocation density of the martensite of the steel at the surface of the sample were changed as shown in Table 3. "OK" and "NG" described in the column of "satisfaction of Formula 3" in Table 3 mean that Formula 3 shown above is satisfied and Formula 3 is not satisfied, respectively.

[Table 3]

Table 3

| Sample | Steel type | Properties of each sample on surface | | | | |
| --- | --- | --- | --- | --- | --- | --- |
| | | Hardness (Hv) | Nitrogen concentration (mass%) | Amount of residual austenite (Volume%) | Dislocation density of martensite (m$^{-2}$) | Satisfaction of Formula 3 |
| 20 | SUJ2 | 892 | 0.34 | 13.6 | 1.30 $\times$ 10$^{15}$ | OK |

(continued)

| Sample | Steel type | Properties of each sample on surface | | | | |
|---|---|---|---|---|---|---|
| | | Hardness (Hv) | Nitrogen concentration (mass%) | Amount of residual austenite (Volume%) | Dislocation density of martensite (m$^{-2}$) | Satisfaction of Formula 3 |
| 21 | SUJ2 | 885 | 0.16 | 11.9 | $1.37 \times 10^{15}$ | OK |
| 22 | SUJ2 | 934 | 0.45 | 12.6 | $1.37 \times 10^{15}$ | OK |
| 23 | SUJ2 | 897 | 0.23 | 10.3 | $1.41 \times 10^{15}$ | OK |
| 24 | SUJ2 | 866 | 0.12 | 9.7 | $1.48 \times 10^{15}$ | OK |
| 25 | SCM420 | 838 | 0.43 | 11.0 | $1.25 \times 10^{15}$ | NG |
| 26 | SCM420 | 849 | 0.36 | 9.4 | $1.38 \times 10^{15}$ | NG |
| 27 | SUJ2 | 770 | 0.00 | 7.2 | $1.31 \times 10^{15}$ | NG |
| 28 | SUJ2 | 856 | 0.36 | 15.6 | $1.30 \times 10^{15}$ | OK |
| 29 | SUJ2 | 847 | 0.20 | 13.8 | $1.33 \times 10^{15}$ | NG |
| 30 | SUJ2 | 865 | 0.24 | 11.9 | $1.36 \times 10^{15}$ | OK |
| 31 | SUJ2 | 862 | 0.38 | 18.5 | $1.34 \times 10^{15}$ | OK |
| 32 | SUJ2 | 868 | 0.19 | 17.3 | $1.47 \times 10^{15}$ | OK |
| 33 | SUJ2 | 877 | 0.19 | 20.9 | $1.40 \times 10^{15}$ | OK |
| 34 | SUJ2 | 801 | 0.20 | 10.2 | $1.16 \times 10^{15}$ | NG |
| 35 | SUJ2 | 783 | 0.17 | 12.1 | $9.98 \times 10^{14}$ | NG |
| 36 | SUJ2 | 772 | 0.25 | 24.3 | $1.30 \times 10^{15}$ | NG |
| 37 | SUJ2 | 742 | 0.00 | 9.0 | $1.23 \times 10^{15}$ | NG |
| 38 | SUJ2 | 706 | 0.00 | 5.3 | $9.43 \times 10^{14}$ | NG |

The nitrogen concentration in the steel on the surface of each sample was adjusted by changing a heating temperature and a retaining time in a nitriding treatment or a nitrocarburizing treatment. The dislocation density of martensite in the steel on the surface of each sample was adjusted by changing a cooling temperature and a retaining time in a sub-zero treatment or a cryo treatment. In samples 20 to 24, sample 28, and samples 30 to 33, Formula 3 was satisfied. On the other hand, in Samples 25 to 27, Sample 29, and Samples 34 to 38, Formula 3 was not satisfied.

In samples 20 to 24, sample 28, and samples 30 to 33, the hardness of the steel on the surface of the sample was greater than or equal to 850 Hv. On the other hand, in samples 25 to 27, 29 and 34 to 38, the hardness of the steel at the surface of the samples was less than 850 Hv. This comparison has made it clear that the hardness of the steel on the surface of the mechanical component becomes greater than or equal to 850 Hv and the rolling fatigue life is improved by satisfying Formula 3. From another point of view, it has been found that, by increasing both the nitrogen concentration in the steel on the surface of the mechanical component and the dislocation density of martensite in the steel on the surface of the mechanical component, the hardness of the steel on the surface of the mechanical component is improved, and eventually, the rolling fatigue life of the mechanical component is improved.

(Test for evaluating temporal change in dimension)

Samples 22, 28, and 31 described above were used to evaluate the temporal change in dimension. Table 4 shows the amount of residual austenite in the steel in cores 12 of samples 22, 28 and 31 and the dislocation density in the steel in cores 12 of samples 22, 28 and 31.

[Table 4]

Table 4

| Sample | Properties of each sample in core 12 | | | | After retaining at 160°C for 2500 h | |
| --- | --- | --- | --- | --- | --- | --- |
| | Amount of residual austenite (Volume%) | Solid solution carbon amount (mass%) | Dislocation density of martensite (m$^{-2}$) | Dislocation density of residual austenite (m$^{-2}$) | Dimensional change rate (10$^{-5}$) | Hardness on surface (Hv) |
| 22 | 8.2 | 0.69 | $1.34 \times 10^{15}$ | $6.05 \times 10^{14}$ | 6.5 | 889 |
| 28 | 8.7 | 0.68 | $1.23 \times 10^{15}$ | $4.22 \times 10^{14}$ | 38.5 | 844 |
| 31 | 11.8 | 0.73 | $1.32 \times 10^{15}$ | $3.54 \times 10^{14}$ | 60.8 | 833 |

The dislocation density of martensite in the steel in core 12 of each sample and the amount of residual austenite in the steel in core 12 of each sample were adjusted by changing the cooling temperature and the retaining time in the sub-zero treatment or the cryo treatment.

Condition D is that the dislocation density of residual austenite in the steel in core 12 of the sample is greater than or equal to $4.0 \times 10^{14}$ m$^{-2}$. Condition E is that the amount of residual austenite in the steel in core 12 of the sample is less than or equal to 9 volume percent.

In samples 22 and 28, condition D and condition E were satisfied. On the other hand, in sample 31, condition D and condition E were not satisfied. In samples 22 and 28, the dimensional change rate after retaining at 160°C for 2500 hours was less than or equal to $40 \times 10^{-5}$. On the other hand, in sample 31, the dimensional change rate after retaining at 160°C for 2500 hours exceeded $50 \times 10^{-5}$. This comparison has made it clear that the dimensional change of the mechanical component is suppressed by satisfying condition D and condition E.

Condition F is that the dislocation density of residual austenite in the steel in core 12 of the sample is greater than or equal to $6.0 \times 10^{14}$ m$^{-2}$. In sample 22, condition F was satisfied, and the dimensional change rate after retaining at 160°C for 2500 hours was less than or equal to $15 \times 10^{-5}$. On the other hand, in sample 28, condition F was not satisfied, and the dimensional change rate after retaining at 160°C for 2500 hours exceeded $15 \times 10^{-5}$. This comparison has made it clear that the dimensional change of the mechanical component is further suppressed by satisfying condition F.

Condition G is that the nitrogen concentration on the surface of the sample is greater than or equal to 0.4 mass percent. In sample 22, condition G was satisfied, and the hardness on the surface after retaining at 160°C for 2500 hours was greater than or equal to 850 Hv. On the other hand, in sample 28, condition G was not satisfied, and the hardness on the surface after retaining at 160°C for 2500 hours was less than 850 Hv. This comparison has made it clear that, by satisfying condition G, the hardness at the surface of the mechanical component is maintained even after use in a high-temperature environment.

The embodiment of the present invention has been described above, but the above embodiment can be variously modified. The scope of the present invention is not limited to the above embodiment. The scope of the present invention is indicated by the claims, and it is intended that all modifications within the meaning and scope of the claims are included in the present invention.

REFERENCE SIGNS LIST

A: central axis, S1: preparation step, S2: nitriding step, S3: quenching step, S4: cooling step, S5: tempering step, S6: post-treatment step, 10: inner ring, 10a: first end surface, 10b: second end surface, 10c: inner peripheral surface, 10d: outer peripheral surface, 10da: raceway surface, 11: nitrided layer, 12: core, 20: processing target member, 20a: first end surface, 20b: second end surface, 20c: inner peripheral surface, 20d: outer peripheral surface, 30: outer ring, 40: rolling element, 50, 60: processing target member, 70: retainer, 100: rolling bearing

**Claims**

1. A mechanical component that includes steel having been quenched and tempered and has a surface, the mechanical component comprising:

   a nitrided layer that is located on the surface and contains nitrogen as a solid solution; and
   a core located at a position farther away from the surface than the nitrided layer,
   wherein
   a nitrogen concentration in the steel on the surface is greater than or equal to 0.01 mass percent,
   hardness of the steel on the surface is greater than or equal to 820 Hv,
   an amount of residual austenite in the steel in the core is greater than or equal to 0.1 volume percent and less than or equal to 9 volume percent,
   a dislocation density of the residual austenite in the steel in the core is greater than or equal to $4.0 \times 10^{14}$ m$^{-2}$, and
   the steel is high carbon steel or bearing steel.

2. The mechanical component according to claim 1, wherein a dislocation density of martensite in the steel in the core is greater than or equal to $6.0 \times 10^{14}$ m$^{-2}$.

3. A mechanical component that includes steel having been quenched and tempered and has a surface, the mechanical component comprising:

   a nitrided layer that is located on the surface and contains nitrogen as a solid solution; and
   a core located at a position farther away from the surface than the nitrided layer, wherein
   a nitrogen concentration in the steel on the surface is greater than or equal to 0.01 mass percent,
   hardness of the steel on the surface is greater than or equal to 820 Hv,
   an amount of residual austenite in the steel in the core is greater than or equal to 0.1 volume percent and less than or equal to 5 volume percent,
   a dislocation density of the residual austenite in the steel in the core is greater than or equal to $4.0 \times 10^{15}$ m$^{-2}$, and
   the steel is low carbon steel or carburized steel.

4. The mechanical component according to claim 1, wherein when the nitrogen concentration in the steel on the surface is X (unit: mass percent), and a dislocation density of martensite in the steel on the surface is Y (unit: m$^{-2}$), a relationship of $934923.48 + 379.96 \times X - 330.96 \times Y^2 - 5.41 \times 10^4 \times \log Y + 783.83 \times \log X^2 \geq 0$ is satisfied.

5. The mechanical component according to claim 1, wherein the steel contains greater than or equal to 0.77 mass percent of carbon, less than or equal to 4.0 mass percent of chromium, greater than or equal to 0.10 mass percent and less than or equal to 0.70 mass percent of silicon, and less than or equal to 0.25 mass percent of molybdenum.

6. The mechanical component according to claim 2, wherein the steel contains greater than or equal to 0.01 mass percent and less than 0.77 mass percent of carbon, less than or equal to 4.0 mass percent of chromium, greater than or equal to 0.10 mass percent and less than or equal to 0.70 mass percent of silicon, and less than or equal to 0.25 mass percent of molybdenum.

7. The mechanical component according to claim 1, wherein a dimensional change rate after retaining at 160°C for 2500 hours is less than or equal to $40 \times 10^{-5}$.

8. The mechanical component according to claim 1, wherein a dimensional change rate after retaining at 160°C for 2500 hours is less than or equal to $15 \times 10^{-5}$.

9. A mechanical component that includes steel having been quenched and tempered and has a surface, the mechanical component comprising:

   a nitrided layer that is located on the surface and contains nitrogen as a solid solution; and
   a core located at a position farther away from the surface than the nitrided layer, wherein
   a nitrogen concentration in the steel on the surface is greater than or equal to 0.3 mass percent,
   hardness of the steel on the surface is greater than or equal to 850 Hv,
   an amount of residual austenite in the steel in the core is less than or equal to 9 volume percent,
   a dislocation density of the residual austenite in the steel in the core is greater than or equal to $4.0 \times 10^{14}$ m$^{-2}$, and

the steel is high carbon steel or bearing steel.

10. The mechanical component according to claim 9, wherein when the nitrogen concentration in the steel on the surface is X (unit: mass percent), and a dislocation density of martensite in the steel on the surface is Y (unit: $m^{-2}$), a relationship of $934893.48 + 379.96 \times X - 330.96 \times Y^2 - 5.41 \times 10^4 \times \log Y + 783.83 \times \log X^2 \geq 0$ is satisfied.

11. The mechanical component according to claim 9 or 10, wherein the hardness of the steel on the surface after retaining at 160°C for 2500 hours is greater than or equal to 850 Hv.

12. The mechanical component according to claim 10, wherein the steel contains less than 0.77 mass percent of carbon, less than or equal to 4.0 mass percent of chromium, greater than or equal to 0.10 mass percent and less than or equal to 0.70 mass percent of silicon, and less than or equal to 0.25 mass percent of molybdenum.

13. A rolling bearing comprising:

an inner ring;
an outer ring; and
a rolling element, wherein
at least one of the inner ring, the outer ring, or the rolling element is the mechanical component according to any one of claims 1 to 12.

FIG. 1

FIG. 2A

30

FIG. 2B

<u>40</u>

FIG. 2C

100

30

70

10

40

FIG. 3

```
┌─────────────────────────┐
│   PREPARATION STEP      │ ─── S1
└─────────────────────────┘
            │
            ▼
┌─────────────────────────┐
│    NITRIDING STEP       │ ─── S2
└─────────────────────────┘
            │
            ▼
┌─────────────────────────┐
│    QUENCHING STEP       │ ─── S3
└─────────────────────────┘
            │
            ▼
┌─────────────────────────┐
│     COOLING STEP        │ ─── S4
└─────────────────────────┘
            │
            ▼
┌─────────────────────────┐
│    TEMPERING STEP       │ ─── S5
└─────────────────────────┘
            │
            ▼
┌─────────────────────────┐
│  POST-TREATMENT STEP    │ ─── S6
└─────────────────────────┘
```

FIG. 4

FIG. 5A

FIG. 5B

60

FIG. 6

INDENTATION    AMOUNT OF BULGE AROUND INDENTATION

HEIGHT OF SURFACE

POSITION ON SURFACE

FIG. 7

## INTERNATIONAL SEARCH REPORT

| International application No. |
| --- |
| **PCT/JP2022/035125** |

**A. CLASSIFICATION OF SUBJECT MATTER**

*C21D 9/40*(2006.01)i; *F16C 33/64*(2006.01)i; *C22C 38/00*(2006.01)i; *C22C 38/22*(2006.01)i; *C21D 1/06*(2006.01)i; *C23C 8/26*(2006.01)i; *C23C 8/32*(2006.01)i

FI: C22C38/00 301N; C22C38/22; C23C8/26; C23C8/32; C21D1/06 A; C21D9/40 A; F16C33/64

According to International Patent Classification (IPC) or to both national classification and IPC

**B. FIELDS SEARCHED**

Minimum documentation searched (classification system followed by classification symbols)

C21D9/40; F16C33/64; C22C38/00-22C38/60; C21D1/06; C23C8/26; C23C8/32

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2006-322017 A (NSK LTD) 30 November 2006 (2006-11-30) claims, paragraphs [0009], [0016]-[0029], table 1 | 1-3, 5-9, 11-13 |
| A | | 4, 10 |
| A | JP 2004-232858 A (NTN CORP) 19 August 2004 (2004-08-19) claims, paragraphs [0001]-[0005], [0008]-[0015] | 1-13 |
| A | JP 2004-339575 A (NSK LTD) 02 December 2004 (2004-12-02) claims, paragraphs [0030]-[0031] | 1-13 |
| A | JP 2017-88958 A (JTEKT CORP) 25 May 2017 (2017-05-25) entire text, all drawings | 1-13 |
| A | US 2019/0101029 A1 (ROLLER BEARING COMPANY OF AMERICA, INC.) 04 April 2019 (2019-04-04) entire text, all drawings | 1-13 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **25 November 2022** | **13 December 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/035125**

| Patent document cited in search report | | | Publication date (day/month/year) | Patent family member(s) | Publication date (day/month/year) |
|---|---|---|---|---|---|
| JP | 2006-322017 | A | 30 November 2006 | (Family: none) | |
| JP | 2004-232858 | A | 19 August 2004 | (Family: none) | |
| JP | 2004-339575 | A | 02 December 2004 | (Family: none) | |
| JP | 2017-88958 | A | 25 May 2017 | (Family: none) | |
| US | 2019/0101029 | A1 | 04 April 2019 | EP 3462048 A1<br>entire text, all drawings | |

Form PCT/ISA/210 (patent family annex) (January 2015)

**EP 4 394 059 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001099163 A